# EUROPÄISCHE PATENTSCHRIFT

(11) **EP 4 255 740 B1**
(45) Veröffentlichungstag und Bekanntmachung des Hinweises auf die Patenterteilung: **30.04.2025**
(21) Anmeldenummer: 21820107.7
(22) Anmeldetag: 25.11.2021
(51) Int. Cl.: B60C 13/00, B29C 33/42, B29D 30/06, B29D 30/72, B60C 11/00

(54) **FAHRZEUGREIFEN AUFWEISEND EINE SCHRAFFURFLÄCHE, VULKANISATIONSFORM UND HERSTELLUNGSVERFAHREN**
VEHICLE TIRE COMPRISING A HATCHED SURFACE, VULCANIZATION MOLD AND PRODUCTION METHOD
PNEUMATIQUE DE VÉHICULE COMPRENANT UNE SURFACE HACHURÉE, MOULE DE VULCANISATION ET PROCÉDÉ DE PRODUCTION

(30) Priorität: 02.12.2020 DE 102020215187
(43) Veröffentlichungstag der Anmeldung: 11.10.2023
(73) Patentinhaber: Continental Reifen Deutschland GmbH, 30175 Hannover (DE)
(72) Erfinder: JURCO, Juraj, 30165 Hannover (DE); RITTWEGER, Stefan, 30165 Hannover (DE)
(74) Vertreter: Continental Corporation
(86) Internationale Anmeldenummer: PCT/DE2021/200201
(87) Internationale Veröffentlichungsnummer: WO 2022/117163

(56) Entgegenhaltungen:
- DE-A1- 102018 217 683
- JP-A- 2016 215 697
- US-A1- 2017 050 473
- US-A1- 2019 047 331
- US-A1- 2020 369 094

## Beschreibung

Die Erfindung betrifft einen Fahrzeugreifen mit Seitenwänden und einem Laufstreifen und mit zumindest einer Schraffurfläche auf zumindest einer der Seitenwände und/oder dem Laufstreifen, wobei die Schraffurfläche länglich ausgebildete Schraffurrippen aufweist, die weitgehend parallel zueinander angeordnet sind. Weiter betrifft die Erfindung eine Vulkanisationsform sowie ein Verfahren zur Herstellung des Fahrzeugreifens.

Derartige Schraffurflächen werden in der Regel im Zuge der Vulkanisation des Reifens mittels einer formgebenden eine Negativkontur der Schraffurfläche aufweisenden Vulkanisationsform in den Reifen geprägt. Eine strukturierte Oberfläche eines bereits vulkanisierten Reifens kann aber auch durch Abtragung, z.B. mittels Gravur, oder durch ein additives Verfahren erreicht werden.

Derartige Schraffurflächen werden in der Regel im Zuge der Vulkanisation des Reifens mittels einer formgebenden eine Negativkontur der Schraffurfläche aufweisenden Formfläche einer Vulkanisationsform in den Reifen geprägt. Eine strukturierte Oberfläche eines bereits vulkanisierten Reifens kann aber auch durch Abtragung, z.B. mittels Gravur, oder durch ein additives Verfahren erreicht werden. Derartige Schraffurflächen sind bekannt. Auf der Reifenseitenwand und/oder auf dem Laufstreifen werden sie z.B. zur Darstellung einer Markierung genutzt. Eine Markierung kann dabei Abbildungen, Schriftzeichen, Firmennamen, Firmenlogos, Kennzeichnungen, Flächen, etc. umfassen. Die Schraffurfläche kann dabei Teil der Markierung sein und/oder diese ganz oder teilweise umgeben.

Die Streuung von Licht an den Flanken der Schraffurrippen verringert die Reflektion des Lichts an der Oberfläche des Reifens, wodurch die Helligkeitswirkung verändert ist. In der Regel wirken dabei mit Quererhebungen versehene Oberflächenbereiche dunkler als im Wesentlichen glatte, von derartigen Erhebungen freie, Oberflächenbereiche. Somit ist ein Kontrast in der an sich monochromen Oberfläche des Reifens, insbesondere der Seitenwand und/oder des Laufstreifens, ermöglicht. Hierdurch können Darstellungen von Markierungen verbessert sichtbar gemacht werden.

Die DE 10 20180217683 A1 und die JP 20160215697 A offenbaren jeweils einen Fahrzeugreifen mit Schraffurrippen mit Quererhebungen. Die US 2017/050473 A1 offenbart Schraffuren für die Erzeugung eines maschinenlesbaren Codes.

Bekannt ist beispielsweise aus der EP 2483088 A1 ein Fahrzeugreifen, der auf seiner Seitenwand eine Vielzahl von weitgehend parallel zueinander angeordnete Schraffurrippen zur kontrastreichen Oberflächengestaltung und Hervorhebung einer Markierung aufweist. Die Gestaltungsmöglichkeiten sind mit einer solchen Schraffur allerdings eingeschränkt.

Aufgabe ist es daher, die Kontrastwirkung noch gezielter zu beeinflussen und die Kontrastwirkung weiter zu erhöhen. Zudem soll eine zuverlässige Herstellbarkeit des Reifens mittels einer Vulkanisationsform ermöglicht werden.

Dies wird erreicht durch einen Fahrzeugreifen gemäß Anspruch 1, eine Vulkanisationsform gemäß Anspruch 14 und ein Herstellungsverfahren gemäß Anspruch 15.

Der erfindungsgemäße Fahrzeugreifen zeichnet sich dadurch aus, dass jede Schraffurrippe der Schraffurrippen Abzweigungen aufweist, wobei von jeder Abzweigung der Abzweigungen jeweils genau eine kurze Quererhebung abzweigt und dass die kurzen Quererhebungen alle auf eine gleiche erste Seite der Schraffurrippen abzweigen und in einem freien Ende enden und dass die Schraffurrippen mit einem zweiten Mittenabstand von 0,4 mm bis 1,0 mm angeordnet sind.

Jede Schraffurrippe bildet somit mit den von ihr auf die erste Seite abzweigenden Quererhebungen ein in der Draufsicht kammartiges Schraffurelement. Die Schraffurrippen und die kurzen Quererhebungen sind dabei jeweils als Erhebung aus einem Schraffurgrund der Schraffurfläche ausgebildet. Jede Schraffurrippe weist Abzweigungen auf, wobei von jeder Abzweigung jeweils genau eine der kurzen Quererhebungen abzweigt, d.h. dass in jede Abzweigung einer Schraffurrippe genau eine kurze Quererhebung einmündet. Die kurzen Quererhebungen zweigen dabei alle auf die gleiche erste Seite der Schraffurrippen ab, d.h. sie münden alle von der gleichen ersten Seite in die jeweilige Schraffurrippe ein.

Die kurzen Quererhebungen enden in freien Enden. Somit sind die kurzen Quererhebungen frei von weiteren Abzweigungen und/oder von Kreuzungen mit weiteren Erhebungen aus dem Schraffurgrund. Jede kurze Quererhebung zweigt jeweils von genau einer Schraffurrippe ab und endet vor der nächsten Schraffurrippe. Die freien Enden der kurzen Quererhebungen streuen das Licht zusätzlich in unterschiedliche Richtungen und zwischen den freien Enden und der benachbarten nächsten Schraffurrippe gibt es eine weitere Verschattung.

Die Quererhebungen aller Schraffurrippen zweigen auf die gleiche erste Seite der Schraffurrippen ab und erstrecken sich als Erhebungen aus dem Schraffurgrund bis zu ihrem freien Ende. Somit ergibt sich in einer Richtung quer zu einer Längserstreckungsrichtung der Schraffurrippen eine Abfolge aus Schraffurrippe, Bereich mit von der Schraffurrippe abzweigenden kurzen Quererhebungen, nächste Schraffurrippe, Bereich mit von der nächste Schraffurrippe abzweigenden kurzen Quererhebungen, etc. Hierdurch ist eine gezielte Steuerung der Kontrastwirkung ermöglicht.

Es hat sich gezeigt, dass Schraffurrippen mit abzweigenden kurzen Quererhebungen eine deutlich stärkere Kontrastwirkung erzeugen als Schraffurrippen, die frei von derartigen in Abzweigungen abzweigenden kurzen Quererhebungen sind. Die zusätzlichen Flanken der kurzen Quererhebungen verstärken die Streuung, die Mehrfachreflektion sowie die Absorption von auf die Schraffurfläche fallenden Lichts.

Zudem sind auf die erste Seite der Schraffurrippen weisende Flanken der Schraffurrippen durch die kurzen Quererhebungen unterbrochen, wodurch der Kontrast weiter erhöht wird. Im Gegensatz hierzu sind von der ersten Seite der Schraffurrippen wegweisende Flanken frei von Unterbrechungen, insbesondere frei von Unterbrechungen durch einmündende Erhebungen.

Auch erzeugen die kurzen Quererhebungen zusätzliche Schatteneffekte, die besonders auf dem schwarzen Gummi des Fahrzeugreifens ein deutliches Hervorheben der Schraffurfläche gegenüber den umgebenden insbesondere glatten Flächenbereichen bewirken.

Durch die Schaffurrippen mit erfindungsgemäß abzweigenden kurzen Quererhebungen ist die Kontrastwirkung somit noch gezielter beeinflussbar und verbesserbar.

Ein weiterer Vorteil besteht darin, dass eine Formoberfläche aufweisend ein Formnegativ einer derartigen Schraffurfläche besonders zuverlässig insbesondere mittels Lasergravur herstellbar ist. Vor allem das Formnegativ der abzweigenden kurzen Quererhebungen ist mit einer zuverlässigeren Präzision herstellbar. Insbesondere die Breite des Formnegativs der auf genau die erste Seite abzweigenden kurzen Quererhebungen ist mittels Lasergravur zuverlässig steuerbar. Somit ist auch die Breite der auf genau die erste Seite abzweigenden kurzen Quererhebungen der Schraffurfläche zuverlässig steuerbar, wodurch die Kontrastwirkung am Reifen zuverlässig sichergestellt werden kann.

Sind Erhebungen, insbesondere Schraffurrippen oder kurze Quererhebungen, weitgehend parallel zueinander angeordnet, so bedeutet dies im Sinne der Anmeldung, dass Längserstreckungsrichtungen jeweils benachbarter Erhebungen der Erhebungen einen Winkel von maximal 5° miteinander einschließen.

Eine vorteilhafte Ausführungsform ist dadurch gegeben, dass die kurzen Quererhebungen zumindest einer Schraffurrippe der Schraffurrippen weitgehend parallel zueinander angeordnet sind.

Hierdurch ist eine große Dichte an kurzen Quererhebungen ermöglicht, wodurch die Kontrastwirkung weiter verstärkt wird. Durch die gleiche Ausrichtung der Quererhebungen ist gleichzeitig eine Negativkontur der so ausgestalteten Schraffurfläche in einer Formfläche einer Vulkanisationsform besonders effizient mittels Gravur, insbesondere Lasergravur, erzeugbar.

Eine besonders gleichmäßige Kontrastwirkung ergibt sich, wenn die kurzen Quererhebungen aller Schraffurrippen weitgehend parallel zueinander angeordnet sind.

Eine weitere vorteilhafte Ausführungsform ist dadurch gegeben, dass die Abzweigungen zumindest einer Schraffurrippe der Schraffurrippen äquidistant angeordnet sind.

Hierdurch ist eine gleichmäßige Kontrastwirkung erreichbar. Die äquidistante Anordnung ermöglicht auch eine effiziente Herstellung einer Negativkontur der so ausgestalteten Schraffurfläche in einer Formfläche einer Vulkanisationsform mittels Gravur, insbesondere Lasergravur.

Eine besonders gleichmäßige Kontrastwirkung ergibt sich, wenn alle Schraffurrippen derart ausgebildet sind.

Eine weitere vorteilhafte Ausführungsform ist dadurch gegeben, dass die Abzweigungen zumindest einer Schraffurrippe der Schraffurrippen und die Abzweigungen einer zu der zumindest einen Schraffurrippe benachbarten Schraffurrippe versetzt zueinander angeordnet sind.

Hierdurch sind die kurzen Quererhebungen besonders gleichmäßig über die Schraffurfläche verteilbar. Auch dies ermöglicht eine effiziente Herstellung einer Negativkontur der so ausgestalteten Schraffurfläche in einer Formfläche einer Vulkanisationsform mittels Gravur, insbesondere Lasergravur.

Eine weitere vorteilhafte Ausführungsform ist dadurch gegeben, dass eine Längserstreckungsrichtung zumindest einer Schraffurrippe der Schraffurrippen einen Winkel von 45° bis 90°, bevorzugt von 60° bis 90°, besonders bevorzugt von weitgehend 90°, mit der jeweiligen Längserstreckungsrichtung der jeweils abzweigenden kurzen Quererhebung einschließt.

Der Winkel beeinflusst die lokale Dichteverteilung an geneigten Flanken im Anschluss an eine Abzweigung. Bei einem Winkel von kleiner als 45° ist jedoch die Entformung des Reifens erschwert. Ein Winkel von 60° bis 90° ermöglicht eine verbesserte Kontrastwirkung bei gleichzeitig guter Entformbarkeit aus einer Formfläche aufweisend eine Negativkontur der so ausgestalteten Schraffurfläche. Die Entformbarkeit ist bei einem Winkel von 90° weiter verbessert.

Zweckmäßig ist es dabei auch, wenn alle kurzen Quererhebungen einer Schraffurrippe den gleichen Winkel mit der jeweiligen Schraffurrippe einschließen. Hierdurch ist die Anzahl der zu gravierenden Richtungen zur Erzeugung eines Formnegativs für diese Schraffurrippe begrenzt. Dieser Vorteil verstärkt sich weiter, wenn alle Schraffurrippen derart ausgestaltet sind.

Eine weitere vorteilhafte Ausführungsform ist dadurch gegeben, dass die kurzen Quererhebungen zumindest einer Schraffurrippe der Schraffurrippen eine Länge L von 0,2 mm bis 0,5 mm, bevorzugt von 0,25 mm bis 0,40 mm, besonders bevorzugt von 0,25 mm bis 0,32 mm, aufweisen.

Die Länge L der kurzen Quererhebungen kann gemessen sein von einer Gratlinie der Schraffurrippe, die entlang eines Grates bzw. der Mitte eines Grates der Schraffurrippe verläuft, bis zum freien Ende der kurzen Quererhebung, gemessen auf einem Drittel einer Höhe H der Schraffurrippe und gemessen parallel zu einem Niveau des Schraffurgrundes.

Die Kontrastwirkung von kurzen Quererhebungen mit einer Länge L von kleiner als 0,2 mm ist begrenzt. Eine Länge L von 0,2 mm bis 0, 5 mm ermöglicht bei begrenzter Länge eine vorteilhafte Beeinflussung der Kontrastwirkung. Gleichzeitig ist eine entsprechendes Negativkontur einer Formfläche einer Vulkanisationsform durch Lasergravur zuverlässig herstellbar. Besonders vorteilhaft hat sich hierbei eine Länge von 0,25 mm bis 0,40 mm, besonders bevorzugt von 0,25 mm bis 0,32, herausgestellt. Der Vorteil verstärkt sich, wenn mehrere, bevorzugt alle, Schraffurrippen derart ausgebildet sind. Eine solche Länge L ermöglicht eine gute Entformbarkeit des Reifens aus einer Formfläche aufweisend eine Negativkontur der so ausgestalteten Schraffurfläche.

Eine weitere vorteilhafte Ausführungsform ist dadurch gegeben, dass die Abzweigungen zumindest einer Schraffurrippe der Schraffurrippen einen ersten Mittenabstand von 0,2 mm bis 0,4 mm, bevorzugt von 0,25 mm bis 0,30 mm, aufweisen.

Ein solcher erster Mittenabstand der Abzweigungen einer Schraffurrippe ermöglicht eine klare Trennung der kurzen QR bei gleichzeitiger dichter Anordnung der Quererhebungen. Der erste Mittenabstand kann gemessen sein parallel einem Niveau des Schraffurgrundes. Eine Negativkontur der so ausgestalteten Schraffurfläche in einer Formfläche einer Vulkanisationsform ist zuverlässig und präzise mittels Lasergravur erzeugbar und die Formfläche gut reinigbar. Ein derartiger Reifen ist gut aus der Vulkanisationsform ausformbar.

Erfindungsgemäß sind die Schraffurrippen mit einem zweiten Mittenabstand von 0,4 mm bis 1,0 mm, bevorzugt von 0,5 mm bis 0,7 mm, besonders bevorzugt von 0,55 mm bis 0,60 mm, angeordnet.

Ein zweiter Mittenabstand zwischen benachbarten Schraffurrippen von mindestens 0,4 mm, bevorzugt mindestens 0,5 mm, besonders bevorzugt mindestens 0,55 mm, ermöglicht ausreichend Platz zwischen benachbarten Schraffurrippen für die Anordnung der Quererhebungen. Der zweiter Mittenabstand zwischen benachbarten Schraffurrippe von höchstens 1,0 mm, bevorzugt höchstens 0,7 mm, besonders bevorzugt höchstens 0,60 mm, ermöglicht eine für die Kontrastwirkung ausreichend dichte Anordnung der Schraffurrippen. Ein solcher zweiter Mittenabstand ermöglicht eine verbesserte Kontrastwirkung bei gleichzeitig mäßigem Fertigungsaufwand der Negativkontur der so ausgestalteten Schraffurfläche in einer Formfläche einer Vulkanisationsform mittels Gravur, insbesondere Lasergravur. Der zweite Mittenabstand der Schraffurrippen kann gemessen sein zwischen Gratlinien der Schraffurrippen, wobei die Gratlinien jeweils entlang eines Grates bzw. der Mitte eines Grates der jeweiligen Schraffurrippe verlaufen und wobei der zweite Mittenabstand gemessen ist parallel zur einem Niveau des Schraffurgrundes. Der Vorteil verstärkt sich, wenn mehrere, bevorzugt alle, Schraffurrippen derart ausgebildet sind.

Eine weitere vorteilhafte Ausführungsform ist dadurch gegeben, dass eine zumindest eine Schraffurrippe der Schraffurrippen eine Höhe H von 0,1 mm bis 0,8 mm, bevorzugt von 0,2 mm bis 0,5 mm, besonders bevorzugt von 0,25 mm bis 0,35 mm, aufweist.

Die Höhe H einer Schraffurrippe kann die entlang der Längserstreckung der Schraffurrippe gemittelte Höhe sein. Höhen können gemessen sein relativ zu einem Niveau des Schraffurgrundes der Schraffurfläche.

Mittelwerte entsprechen in der Regel dem arithmetischen Mittelwert.

Hierdurch ist eine günstige Dimensionierung zugunsten der Herstellbarkeit erreicht. Eine Negativkontur der so ausgestalteten Schraffurfläche in einer Formfläche einer Vulkanisationsform kann mittels Gravur, insbesondere Lasergravur, erzeugt werden.

Besonders vorteilhaft ist die Schraffurfläche, wenn mehrere, bevorzugt alle, Schraffurrippen eine entsprechende Höhe H aufweisen. Der Vorteil verstärkt sich, wenn mehrere, bevorzugt alle, Schraffurrippen derart ausgebildet sind.

Zweckmäßig ist es, wenn an einer Abzweigung die Schraffurrippe und die abzweigende kurze Quererhebung eine gleiche Höhe aufweisen.

Eine weitere vorteilhafte Ausführungsform ist dadurch gegeben, dass zumindest eine Schraffurrippe der Schraffurrippen einander gegenüberliegende Flanken aufweist, die einen Winkel von mindestens 50°, bevorzugt von 55° bis 65°, miteinander einschließen.

Solche Flankenwinkel zeigen eine gute Kontrastwirkung. Eine Negativkontur der so ausgestalteten Schraffurfläche in einer Formoberfläche einer Vulkanisationsform kann beispielsweise mittels Gravur, insbesondere Lasergravur oder spanabtragender Gravur, geschaffen werden.

Eine besonders vorteilhafte Schraffurfläche ergibt sich, wenn die einander gegenüberliegenden Flanken einen derartigen Winkel über eine Höhenerstreckung aufweisen, die zumindest einem Viertel der Höhe H der Schraffurrippe entspricht. Der Vorteil verstärkt sich, wenn mehrere, bevorzugt alle, Schraffurrippen derart ausgebildet sind.

Eine weitere vorteilhafte Ausführungsform ist dadurch gegeben, dass zumindest eine Schraffurrippe der Schraffurrippen und/oder zumindest eine kurze Quererhebung der kurzen Quererhebungen einander gegenüberliegende Flanken aufweist, die einen Winkel von 2° bis 10°, bevorzugt von 6° bis 8°, miteinander einschließen.

Durch einen derart steilen Flankenwinkel ist eine Mehrfachreflektion und damit eine verbesserte Kontrastwirkung erreichbar. Eine Negativkontur der so ausgebildeten Schraffurfläche in einer Formoberfläche einer Vulkanisationsform kann zuverlässig mittels Lasergravur des Formwerkzeugs geschaffen werden. Eine besonders vorteilhafte Schraffurfläche ergibt sich, wenn die einander gegenüberliegenden Flanken einen derartigen Winkel über eine Höhenerstreckung einschließen, die zumindest einem Viertel der Höhe H der Schraffurrippe entspricht. Der Vorteil verstärkt sich auch oder zudem, wenn mehrere, bevorzugt alle, Schraffurrippen derart ausgebildet sind.

Bevorzugt weisen alle kurzen Quererhebungen einer Schraffurrippe der Schraffurrippen jeweils einander gegenüberliegende Flanken auf, die einen Winkel von 2° bis 10°, bevorzugt von 6° bis 8°, miteinander einschließen.

In einer zweckmäßigen Ausführungsform weisen die Schraffurrippen jeweils einander gegenüberliegende Flanken auf, die einen Winkel von mindestens 50° miteinander einschließen und die kurzen Quererhebungen weisen jeweils einander gegenüberliegende Flanken auf, die einen Winkel von 2° bis 10°, bevorzugt von 6° bis 8°, miteinander einschließen.

In einer anderen zweckmäßigen Ausführungsform weisen sowohl die Schraffurrippen als auch die kurzen Quererhebungen jeweils einander gegenüberliegende Flanken auf, die einen Winkel von 2° bis 10°, bevorzugt von 6° bis 8°, miteinander einschließen.

Eine weitere zweckmäßige Ausführungsform ist dadurch gegeben, dass zumindest eine Schraffurrippe der Schraffurrippen und/oder zumindest eine kurze Quererhebung der kurzen Quererhebungen einander gegenüberliegende Flanken aufweist, die einen Winkel von 2° bis 10°, bevorzugt von 6° bis 8°, miteinander einschließen und dass die jeweilige Erhebung dabei eine Breite von 0,08 mm bis 0,13 mm, bevorzugt von 0,1 mm, aufweist. Die Breite kann dabei gemessen sein auf einem Drittel der Höhe der Schraffurrippe bzw. der zur kurzen Quererhebung gehörigen Schraffurrippe.

Eine weitere vorteilhafte Ausführungsform ist dadurch gegeben, dass zumindest eine Schraffurrippe der Schraffurrippen und/oder zumindest eine kurze Quererhebung eine Flanke aufweist, die einen konvex gekrümmten und/oder einen linearen und/oder einen konkav gekrümmten und/oder einen gestuften und/oder einen geknickten und/oder einen strukturierten Bereich aufweist.

Hierdurch ist die Kontrastwirkung noch gezielter beeinflussbar und die Kontrastwirkung weiter verbesserbar. Eine entsprechende Negativkontur in einer Formoberfläche einer Vulkanisationsform kann beispielsweise mittels Gravur, insbesondere Lasergravur, geschaffen werden. Der Vorteil der so ausgestalteten Schraffurfläche verstärkt sich, wenn mehrere, bevorzugt alle, gekreuzten Schraffurrippen und/oder kurzen Quererhebungen derart ausgebildet sind.

Besonders vorteilhaft ist es dabei, wenn sich der entsprechend geformte Bereich über eine Höhenerstreckung erstreckt, die zumindest einem Viertel der Höhe H der Schraffurrippe des Schraffurelements entspricht.

Die Schraffurrippen und/oder die kurzen Quererhebungen können in einem Knick oder gekrümmt in den Schraffurgrund übergehen. Der Querschnitt kann symmetrisch ausgebildet sein.

Die Schraffurrippen und/oder die kurzen Quererhebungen können einen abgeflachten Grat aufweisen. Der Grat kann ein Plateau mit einer Breite von 0,03 mm bis 0,06 mm umfassen. Der Grat kann auch Unregelmäßigkeiten in der Höhe aufweisen, die maximal 5 % der Höhe H betragen.

Eine weitere vorteilhafte Ausführungsform ist dadurch gegeben, dass der Fahrzeugreifen mehrere Schraffurflächen aufweist, die derart angeordnet sind, dass sie einen maschinenlesbaren Code, bevorzugt einen zweidimensionalen Code, besonders bevorzugt einen QR-Code, darstellen.

So kann auf einfache Art und Weise ein kontrastreicher QR-Code auf der Oberfläche des Fahrzeugreifens zur Verfügung gestellt werden. Die Schraffurfläche können dabei die üblicherweise dunkel, insbesondere schwarz, dargestellten Flächen des maschinenlesbaren Codes darstellen. Die üblicherweise hell, insbesondere weiß, dargestellten Flächen des maschinenlesbaren Codes können eine zur Oberflächenstruktur der Schraffurfläche verschiedene Oberflächenstruktur, insbesondere eine weitgehend glatte Fläche, aufweisen.

Unabhängig von der Ausführungsform kann der Schraffurgrund der Schraffurfläche so ausgeführt sein, dass er benachbarte gekreuzte Schraffurrippen und/oder benachbarte kurze Quererhebungen voneinander trennt. Bevorzugt ist dabei ein weitgehend flächig ausgeführter Schraffurgrund.

Eine zweckmäßige Ausführungsform ist dadurch gegeben, dass die kurzen Quererhebungen zumindest einer Schraffurrippe von den Abzweigungen zu dem Schraffurgrund hin kontinuierlich abfallen. Hierdurch ist bei vorteilhafter Stützwirkung der kurzen Quererhebungen gleichzeitig die Entformbarkeit weiter verbessert.

Die Grate der Schraffurrippen und/oder der kurzen Quererhebungen der Schraffurfläche können bezüglich einer die Schraffurfläche umgebende Reifenoberfläche versenkt, erhaben oder auf gleichem Niveau ausgebildet sein.

In einer bevorzugten Ausführungsform ist die Schraffurfläche auf einer der Seitenwände des Fahrzeugreifens ausgebildet. Auf der Seitenwand ist eine vorteilhafte Kontrastwirkung zur Hervorhebung von Markierungen besonders wichtig.

Gemäß einer weiteren bevorzugten Ausführungsform ist die Schraffurfläche am Laufstreifen des Fahrzeugreifens ausgebildet. Die Schraffurfläche kann dabei insbesondere auch auf Rillenflanken und/oder Rillengründen von im Laufstreifen verlaufenden Rillen oder am Laufstreifenauslauf, also an den außerhalb der Bodenaufstandsfläche zu den Seitenwänden verlaufenden Schulterflanken, oder an der Außenfläche des Laufstreifens, also an mit dem Untergrund in Kontakt tretenden Lauffläche, angebracht sein.

Bevorzugt handelt es sich um einen Fahrzeugluftreifen. Besonders bevorzugt handelt es sich um einen Reifen für einen Personenkraftwagen. Es kann sich aber auch um einen anderen Fahrzeugluftreifen, insbesondere für ein Fahrrad, einen Van, ein SUV, einen Light-Truck, ein Nutzfahrzeug, ein Kraftrad und/oder einen Bus, handeln.

Die Erfindung umfasst auch eine Vulkanisationsform zur formgebenden Vulkanisation des erfindungsgemäßen Fahrzeugreifens. Die Vulkanisationsform weist dabei eine Formfläche auf, die eine Negativkontur einer Schraffurfläche aufweist, wobei die Schraffurfläche länglich ausgebildete Schraffurrippen aufweist, die weitgehend parallel zueinander angeordnet sind. Die Vulkanisationsform zeichnet sich dadurch aus, dass jede Schraffurrippe Abzweigungen aufweist, wobei von jeder Abzweigung jeweils genau eine kurze Quererhebung abzweigt und dass die kurzen Quererhebungen alle auf eine gleiche erste Seite der Schraffurrippen abzweigen und in einem freien Ende enden und dass die Schraffurrippen mit einem zweiten Mittenabstand von 0,4 mm bis 1,0 mm, bevorzugt von 0,5 mm bis 0,7 mm, besonders bevorzugt von 0,55 mm bis 0,60 mm, angeordnet sind.

Eine solche Vulkanisationsform ermöglicht die zuverlässige Herstellung des erfindungsgemäßen Fahrzeugreifens. Die Schraffurfläche ist dabei dahingehend optimiert, dass die Negativkontur der Schraffurfläche zuverlässig mittels Lasergravur erzeugbar ist, daraus die Schraffurfläche zuverlässig im Zuge des Vulkanisationspozesses auf der Reifenoberfläche formgebend erzeugbar und ausformbar ist und dass die Formfläche aufweisend die Negativkontur gut reinigbar ist.

Die Erfindung betrifft weiter ein Verfahren zur Herstellung eines erfindungsgemäßen Fahrzeugreifens. Das Verfahren umfasst zumindest die folgenden Schritte:
a) Gravur einer Negativkontur einer Schraffurfläche in eine Formfläche einer Vulkanisationsform zur formgebenden Vulkanisationsform eines Fahrzeugreifens mittels Lasergravur, wobei die Schraffurfläche länglich ausgebildete Schraffurrippen aufweist, die weitgehend parallel zueinander angeordnet sind, wobei jede Schraffurrippe Abzweigungen aufweist, wobei von jeder Abzweigung jeweils genau eine kurze Quererhebung abzweigt und wobei die kurzen Quererhebungen alle auf eine gleiche erste Seite der Schraffurrippen abzweigen und in einem freien Ende enden,
b) Bereitstellen eines Reifenrohlings und Positionieren des Reifenrohlings in der Vulkanisationsform aufweisend die Formfläche,
c) formgebende Vulkanisation des Reifenrohlings mittels der Vulkanisationsform aufweisend die Formfläche, wodurch die Schraffurfläche in eine Außenfläche des Fahrzeugreifens, insbesondere eine Seitenwand und/oder ein Laufstreifen des Fahrzeugreifens, geprägt wird.

Hierdurch ist eine zuverlässige Herstellung des erfindungsgemäßen Fahrzeugreifens ermöglicht. Die Negativkontur der Schraffurfläche ist dabei dahingehend optimiert, dass sie zuverlässig mittels Lasergravur erzeugbar ist, daraus die Schraffurfläche zuverlässig im Zuge des Vulkanisationspozesses formgebend erzeugbar und ausformbar ist und dass die Formfläche aufweisend die Negativkontur gut reinigbar ist. Bevorzugt ist die Schraffurfläche auf der Seitenwand des Reifens angeordnet.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 einen Fahrzeugreifen 1 aufweisend eine Schraffurfläche;
Fig. 2 und 3 jeweils eine Schraffurfläche;
Fig. 4 Draufsicht auf eine Schraffurfläche;
Fig. 5 Ausführungsbeispiele für Querschnitte.

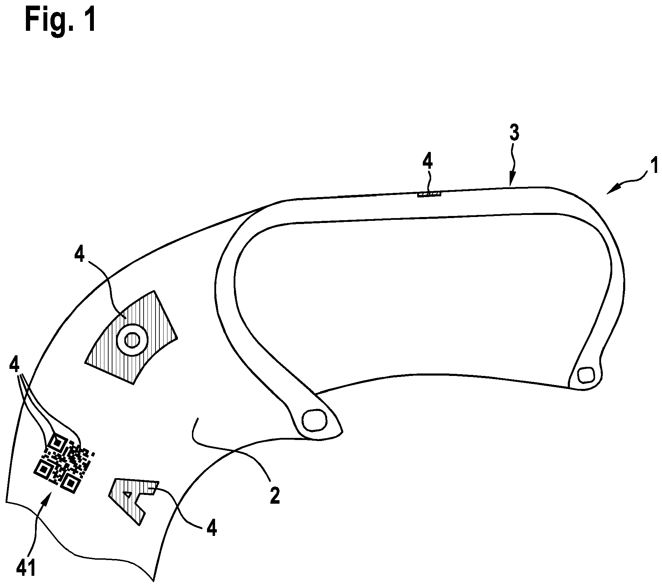

Die Figur 1 zeigt einen Fahrzeugreifen 1 mit Seitenwänden 2 und einem Laufstreifen 3 und mit zumindest einer Schraffurfläche 4 auf zumindest einer der Seitenwände 2 und/oder dem Laufstreifen 3. Bei einer Anordnung am Laufstreifen 3 kann die Schraffurfläche dabei insbesondere auch auf Rillenflanken und/oder Rillengründen von im Laufstreifen 3 verlaufenden Rillen oder am Laufstreifenauslauf, also an den außerhalb der Bodenaufstandsfläche zu den Seitenwänden verlaufenden Schulterflanken, oder an der Außenfläche des Laufstreifens, also an mit dem Untergrund in Kontakt tretenden Lauffläche, angebracht sein. Bevorzugt ist die Schraffurfläche 4 auf zumindest einer der Seitenwände 2 angebracht. Bevorzugt handelt es sich um einen Fahrzeugluftreifen, insbesondere für einen Personenkraftwagen. Es kann sich aber auch um einen anderen Fahrzeugreifen, insbesondere für ein Fahrrad, einen Van, ein SUV, einen Light-Truck, ein Nutzfahrzeug, ein Kraftrad und/oder einen Bus, handeln.

Die Schraffurfläche 4 weist länglich ausgebildete Schraffurrippen 5 auf, die weitgehend parallel zueinander angeordnet sind. Jede Schraffurrippe 5 weist dabei Abzweigungen 7 auf, wobei von jeder Abzweigung 7 der Abzweigungen jeweils genau eine kurze Quererhebung 6 abzweigt. Die kurzen Quererhebungen 6 zweigen dabei alle auf eine gleiche erste Seite 9 der Schraffurrippen ab und enden in einem freien Ende 8.

Derartige Schraffurflächen 4 eignen sich hervorragend zur Darstellung eines Codes 41, insbesondere eines zweidimensionalen Codes wie beispielsweise eines QR-Codes 41. Hierbei können die üblicherweise dunkel dargestellten Flächen des Codes als Schraffurflächen 4 ausgebildet sein.

Die Grate der Schraffurrippen 5 mit den Gratlinien 18 und/oder die Grate der kurzen Quererhebungen 6 mit den Gratlinien 24 können bezüglich einer die Schraffurfläche umgebende Reifenoberfläche versenkt, erhaben oder auf gleichem Niveau ausgebildet sein.

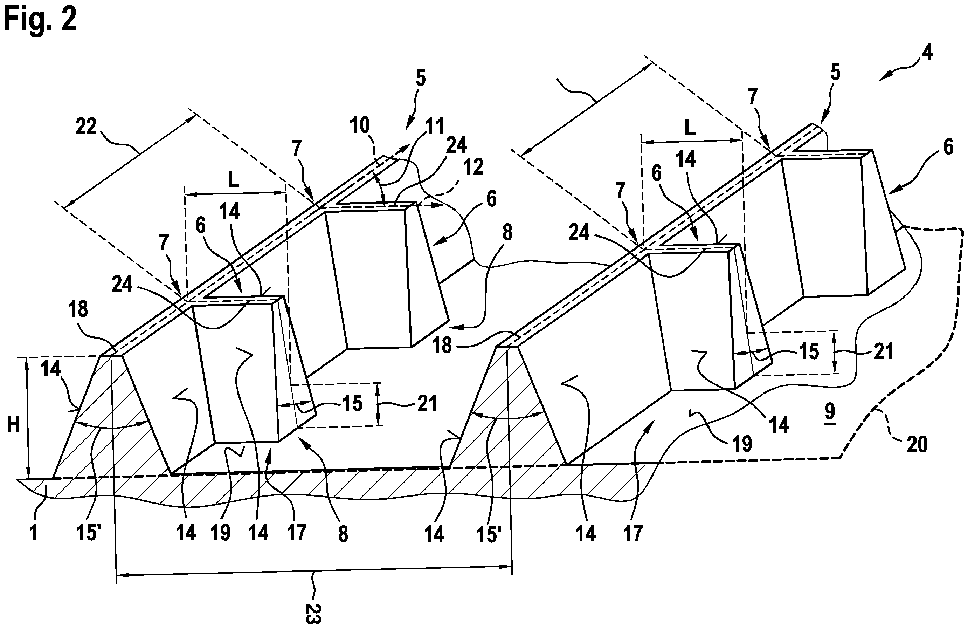

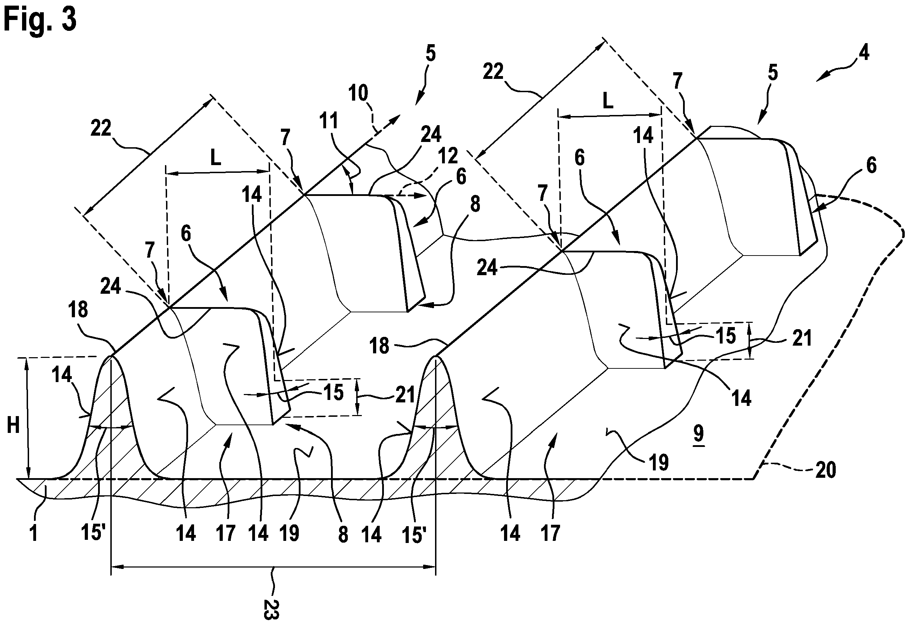

Zwei Ausführungsvarianten einer solchen Schraffurfläche 4 ist sind den Figuren 2 und 3 gezeigt.

Deutlich sind die Abzweigungen 7 jeder Schraffurrippe 5 zu erkennen. Von jeder Abzweigung 7 zweigt jeweils genau eine kurze Quererhebung 6 ab. Die kurzen Quererhebungen 6 aller Schraffurrippen zweigen dabei auf eine gleiche erste Seite 9 der Schraffurrippen ab und erstrecken sich jeweils als Erhebung aus einem Schraffurgrund 19 bis zu ihrem freien Ende 8. Jede Schraffurrippe 5 bildet somit mit den von ihr auf die erste Seite 9 abzweigenden kurzen Quererhebungen 6 ein in der Draufsicht kammartiges Schraffurelement. In einer Richtung quer zu einer Längserstreckungsrichtung der Schraffurrippen 5 ergibt sich somit eine Abfolge aus Schraffurrippe 5, Bereich 17 mit von der jeweiligen Schraffurrippe 5 abzweigenden kurzen Quererhebungen 6, nächste Schraffurrippe 5, nächster Bereich 17 mit von der jeweiligen Schraffurrippe 5 abzweigenden kurzen Quererhebungen 6, etc. Die Schraffurrippen 5 und die kurzen Quererhebungen 6 sind dabei jeweils als Erhebung aus dem Schraffurgrund 19 der Schraffurfläche 4 ausgebildet.

Die kurzen Quererhebungen 6 aller Schraffurrippen 5 enden jeweils in einem freien Ende 8. Somit sind die kurzen Quererhebungen 6 frei von weiteren Abzweigungen und/oder von Kreuzungen mit einer Erhebung aus dem Schraffurgrund 19. Jede kurze Quererhebung 6 zweigt somit von genau einer Schraffurrippe 5 ab und endet vor der nächsten Schraffurrippe 5.

Auf die erste Seite 9 der Schraffurrippen 5 weisende Flanken 14 der Schraffurrippen sind durch die kurzen Quererhebungen 6 unterbrochen, wodurch der Kontrast weiter erhöht wird. Im Gegensatz hierzu sind von der ersten Seite 9 der Schraffurrippen 5 wegweisende Flanken 14 frei von Unterbrechungen.

Die kurzen Quererhebungen 6 zumindest einer Schraffurrippe 5, insbesondere aller Schraffurrippen, der Schraffurrippen sind weitgehend parallel zueinander angeordnet. Die Abzweigungen 7 zumindest einer Schraffurrippe 5, insbesondere aller Schraffurrippen, der Schraffurrippen sind äquidistant angeordnet. Die Abzweigungen 7 einer Schraffurrippe 5 der Schraffurrippen und die Abzweigungen 7 einer zu der Schraffurrippe 5 benachbarten Schraffurrippe 5 sind versetzt zueinander angeordnet.

Eine Längserstreckungsrichtung 10 zumindest einer Schraffurrippe 5 der Schraffurrippen schließt einen Winkel 11 von 45° bis 90°, bevorzugt von 60° bis 90°, besonders bevorzugt von weitgehend 90°, mit der jeweiligen Längserstreckungsrichtung 12 der abzweigenden kurzen Quererhebungen 6 ein. Dargestellt ist ein Winkel 11 von 90°.

Die kurzen Quererhebungen 6 zumindest einer Schraffurrippe 5 der Schraffurrippen weisen eine Länge L von 0,2 mm bis 0,5 mm, bevorzugt von 0,25 mm bis 0,40 mm, besonders bevorzugt von 0,30 mm bis 0,35 mm, auf. Die Länge L kann dabei gemessen sein von einer Gratlinie 18 der Schraffurrippe 5 bis zu dem freien Ende 8 der kurzen Quererhebung 6, gemessen auf einem Drittel 21 einer Höhe H der Schraffurrippe 5 und gemessen parallel zu einem Niveau 20 des Schraffurgrundes 19 der Schraffurfläche 4. Die Gratlinie 18 verläuft dabei, wie in der Fig. 3 dargestellt, entlang des Grates der Schraffurrippe 5 bzw. bei einem abgeflachten Grat entlang der Mitte des Grates, wie in der Fig. 2 dargestellt.

Die Abzweigungen 7 zumindest einer Schraffurrippe 5 der Schraffurrippen weisen einen ersten Mittenabstand 22 von 0,2 mm bis 0,4 mm, bevorzugt von 0,25 mm bis 0,30 mm, auf. Die Schraffurrippen 5 sind mit einem zweiten Mittenabstand 23 von 0,4 mm bis 1,0 mm, bevorzugt von 0,5 mm bis 0,7 mm, besonders bevorzugt von 0,55 mm bis 0,60 mm, angeordnet. Der zweite Mittenabstand 23 der Schraffurrippen kann gemessen sein zwischen den Gratlinien 18 der Schraffurrippen 5, jeweils gemessen parallel zum Niveau 20 des Schraffurgrundes 19.

Zumindest eine Schraffurrippe 5 der Schraffurrippen weist eine Höhe H von 0,1 mm bis 0,8 mm, bevorzugt von 0,2 mm bis 0,5 mm, besonders bevorzugt von 0,25 mm bis 0,35 mm, auf. Die Höhe H einer Schraffurrippe 5 kann die entlang der Längserstreckung der Schraffurrippe gemittelte Höhe sein. Höhen können, wie dargestellt, gemessen sein relativ zu dem Niveau 20 des Schraffurgrundes 19 der Schraffurfläche 4. Mittelwerte entsprechen in der Regel dem arithmetischen Mittelwert.

Die von zumindest einer Schraffurrippe 5 der Schraffurrippen abzweigenden kurzen Quererhebungen 6 weisen jeweils einander gegenüberliegende Flanken 14 auf, die einen Winkel 15 von 2° bis 10°, bevorzugt von 6° bis 8°, miteinander einschließen. Die einander gegenüberliegenden Flanken 14 schließen einen derartigen Winkel 15 dabei über eine Höhenerstreckung ein, die zumindest einem Viertel der Höhe H der jeweiligen Schraffurrippe 5 entspricht.

Die in den Figuren 2 und 3 dargestellten Ausführungsbeispiele unterscheiden sich insbesondere in dem Winkel 15, 15', den die einander gegenüberliegenden Flanken 14 der Schraffurrippen 5 miteinander einschließen.

Das in der Figur 2 dargestellte Ausführungsbeispiel zeichnet sich dadurch aus, dass zumindest eine Schraffurrippe 5 der Schraffurrippen einander gegenüberliegende Flanken 14 aufweist, die einen Winkel 15' von mindestens 50°, bevorzugt von 55° bis 65°, miteinander einschließen. Weiter weist das Ausführungsbeispiel abgeflachte Grate auf, wobei die Gratlinien 18, 24 entlang der Mitte der Grate verläuft.

Das in der Figur 3 dargestellte Ausführungsbeispiel zeichnet sich dadurch aus, dass zumindest eine Schraffurrippe 5 der Schraffurrippen einander gegenüberliegende Flanken 14 aufweist, die einen Winkel 15 von 2° bis 10°, bevorzugt von 6° bis 8°, miteinander einschließen.

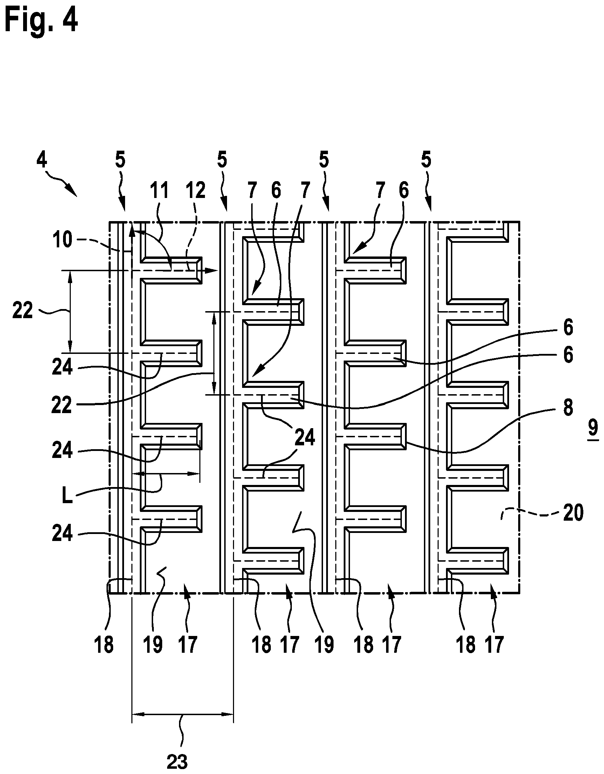

Die Figur 4 zeigt eine schematisierte Draufsicht auf eine erfindungsgemäße Schraffurfläche 4. Es kann sich dabei um die in der Figur 2 dargestellte Schraffurfläche 4 handeln.

Deutlich ist zu erkennen, dass alle kurzen Quererhebungen 6 von der jeweiligen Schraffurrippe 5 weg auf die gleiche erste Seite 9 abzweigen und in einem freien Ende 8 enden.

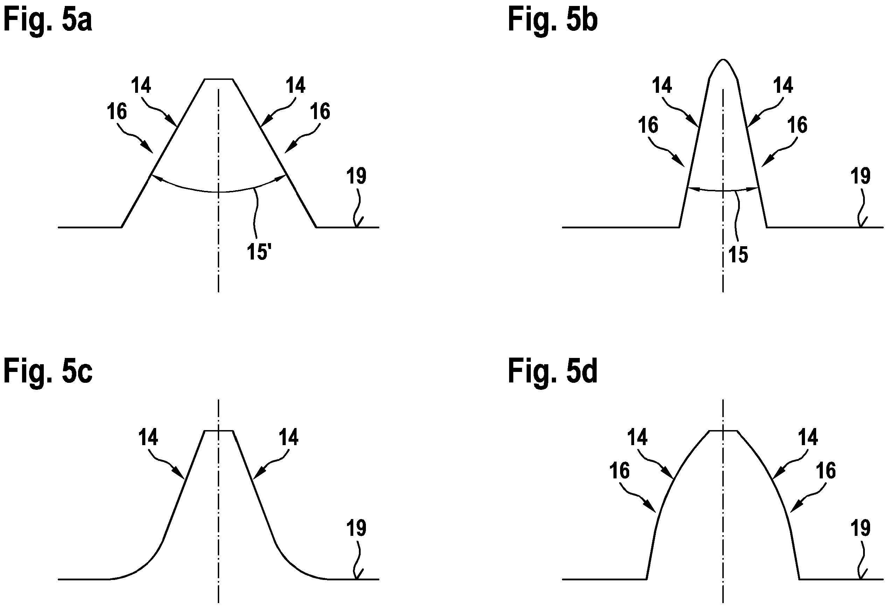

Die Figuren 5a bis 5g zeigen Beispiele für Querschnitte einer der Schraffurrippen 5 und/oder einer der kurzen Quererhebungen 6. Der Querschnitt verläuft dabei jeweils außerhalb einer Abzweigung 7 senkrecht zur Längserstreckungsrichtung 12 der jeweiligen kurzen Quererhebung 6 bzw. senkrecht zur Längserstreckungsrichtung 10 der jeweiligen Schraffurrippe 5. Die Querschnitte eignen sich für die in den Figuren 2 und 3 dargestellten Schraffurbereiche 4. Ohne Beschränkung der Allgemeinheit sind die dargestellten Querschnitte symmetrisch ausgeführt.

Die Fig. 5a zeigt einen Querschnitt, der im Bereich der Flanken 14 einen linear verlaufenden Bereich 16 aufweist. Die Flanken 14 liegen einander gegenüber und können einen Winkel 15' von mindestens 50°, bevorzugt von 55° bis 65°, miteinander einschließen. Die Flanken 14 gehen in einem Knick in den Schraffurgrund 19 über.

Die Fig. 5b zeigt einen entsprechenden Querschnitt, wobei die Flanken 14 einen Winkel 15 von 2° bis 10°, bevorzugt von 6° bis 8°, miteinander einschließen. Die Fig. 5c zeigt exemplarisch, dass die Flanken 14, unabhängig von der genauen Ausgestaltung des Querschnitts, auch mit einer Krümmung in den Schraffurgrund 19 übergehen können.

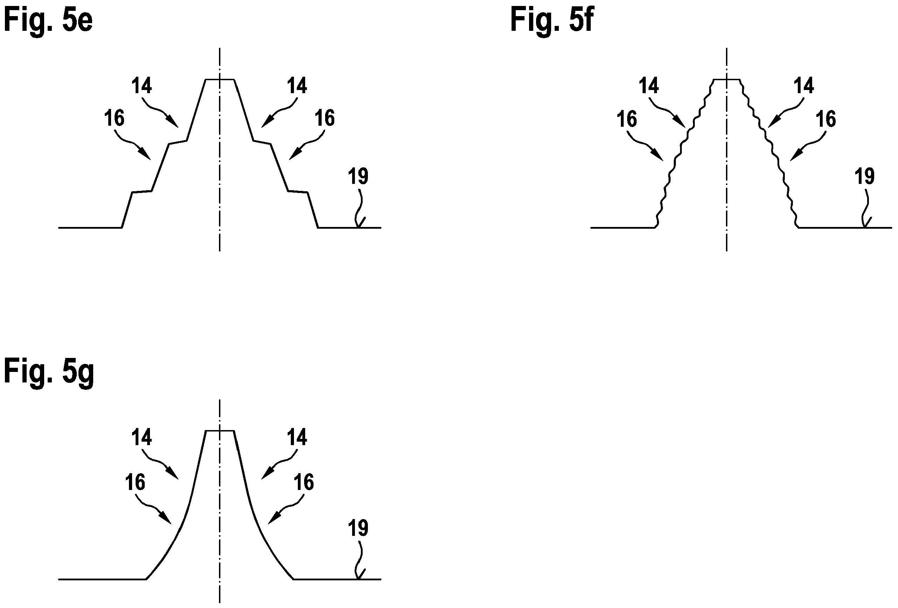

Die Fig. 5d zeigt einen Querschnitt, der im Bereich der Flanken 14 einen konvex gekrümmten Bereich 16 aufweist. Die Fig. 5e zeigt einen Querschnitt, der im Bereich der Flanken 14 einen gestuften Bereich 16 aufweist.

Die Fig. 5f zeigt einen Querschnitt, der im Bereich der Flanken 14 einen strukturierten Bereich 16 aufweist. Die Fig. 5g zeigt einen Querschnitt, der im Bereich der Flanken 14 einen konkav gekrümmten Bereich 16 aufweist.

In allen Figuren 5a bis 5g kann sich der entsprechend ausgeformte Bereich 16 über zumindest ein Viertel der Höhe H der Schraffurrippe des entsprechenden Schraffurelements erstrecken.

Die in den Figuren 1 bis 5 dargestellten Schraffurflächen 4 einer Oberfläche 3,2 eines Fahrzeugreifens 1 können durch formgebende Vulkanisation des Fahrzeugreifens hergestellt werden. Hierzu weist eine Vulkanisationsform eine Formfläche auf, die eine Negativkontur der zu schaffenden Schraffurfläche 4, insbesondere eine Negativkontur der jeweiligen in einer der Figuren 1 bis 5 dargestellten Schraffurfläche 4, aufweist.

Die Herstellung eines Fahrzeugreifens 1 aufweisend eine Oberfläche 2,3 mit einer Schraffurfläche 4 wie in den Figuren 1 bis 5 dargestellt umfasst zumindest die folgenden Schritte:
a) Gravur einer Negativkontur der Schraffurfläche 4 in eine Formfläche einer Vulkanisationsform zur formgebenden Vulkanisationsform eines Fahrzeugreifens 1 mittels Lasergravur, wobei die Schraffurfläche 4 länglich ausgebildete Schraffurrippen 5 aufweist, die weitgehend parallel zueinander angeordnet sind, wobei jede Schraffurrippe 5 Abzweigungen 7 aufweist, wobei von jeder Abzweigung 7 jeweils genau eine kurze Quererhebung 6 abzweigt und wobei die kurzen Quererhebungen 6 alle auf eine gleiche erste Seite 9 der Schraffurrippen 5 abzweigen und in einem freien Ende 8 enden,
b) Bereitstellen eines Reifenrohlings und Positionieren des Reifenrohlings in der Vulkanisationsform aufweisend die Formfläche,
c) formgebende Vulkanisation des Reifenrohlings mittels der Vulkanisationsform aufweisend die Formfläche, wodurch die Schraffurfläche 4 in eine Außenfläche des Fahrzeugreifens 1, insbesondere eine Seitenwand 2 und/oder ein Laufstreifen 3 des Fahrzeugreifens 1, geprägt wird.

Die in Schritt a) in die Formfläche gravierte Negativkontur ist dabei insbesondere eine Negativkontur einer der in den Figuren 1 bis 5 dargestellten Schraffurflächen 4.

### Bezugszeichenliste

- 1: Fahrzeugreifen
- 2: Seitenwand
- 3: Laufstreifen
- 4: Schraffurfläche
- 5: Schraffurrippe
- 6: kurze Quererhebung
- 7: Abzweigung
- 8: freies Ende
- 9: Seite
- 10: Längserstreckungsrichtung einer Schraffurrippe
- 11: Winkel
- 12: Längserstreckungsrichtung einer kurzen Quererhebung
- 13: lichter Abstand
- 14: einander gegenüberliegende Flanken
- 15: Winkel
- 15': Winkel
- 16: Bereich
- 17: Bereich
- 18: Gratlinie einer Schraffurrippe
- 19: Schraffurgrund
- 20: Niveau
- 21: Drittel der Höhe H
- 22: erster Mittenabstand der Abzweigungen
- 23: zweiter Mittenabstand der Schraffurrippen
- 24: Gratlinie einer kurzen Quererhebung
- 41: QR-Code

- H: Höhe einer Schraffurrippe
- L: Länge einer kurzen Quererhebung

## Patentansprüche

1. Fahrzeugreifen (1) mit Seitenwänden (2) und einem Laufstreifen (3) und mit zumindest einer Schraffurfläche (4) auf zumindest einer der Seitenwände (2) und/oder dem Laufstreifen (3), wobei die Schraffurfläche (4) länglich ausgebildete Schraffurrippen (5) aufweist, die weitgehend parallel zueinander angeordnet sind, wobei jede Schraffurrippe (5) der Schraffurrippen Abzweigungen (7) aufweist, wobei von jeder Abzweigung (7) der Abzweigungen jeweils genau eine kurze Quererhebung (6) abzweigt und
wobei die kurzen Quererhebungen (6) alle auf eine gleiche erste Seite (9) der Schraffurrippen (5) abzweigen und in einem freien Ende (8) enden,
**dadurch gekennzeichnet, dass**
die Schraffurrippen (5) mit einem zweiten Mittenabstand (23) von 0,4 mm bis 1,0 mm, angeordnet sind.

2. Fahrzeugreifen (1) nach Anspruch 1, **dadurch gekennzeichnet, dass** die kurzen Quererhebungen (6) zumindest einer Schraffurrippe (5) der Schraffurrippen weitgehend parallel zueinander angeordnet sind.

3. Fahrzeugreifen (1) nach zumindest einem der vorhergehenden Ansprüche, **dadurch gekennzeichnet, dass** die Abzweigungen (7) zumindest einer Schraffurrippe (5) der Schraffurrippen äquidistant angeordnet sind.

4. Fahrzeugreifen (1) nach zumindest einem der vorhergehenden Ansprüche, **dadurch gekennzeichnet, dass** die Abzweigungen (7) zumindest einer Schraffurrippe (5) der Schraffurrippen und die Abzweigungen (7) einer zu der zumindest einen Schraffurrippe (5) benachbarten Schraffurrippe (5) versetzt zueinander angeordnet sind.

5. Fahrzeugreifen (1) nach zumindest einem der vorhergehenden Ansprüche, **dadurch gekennzeichnet, dass** eine Längserstreckungsrichtung (10) zumindest einer Schraffurrippe (5) der Schraffurrippen einen Winkel (11) von 45° bis 90°, bevorzugt von 60° bis 90°, besonders bevorzugt von weitgehend 90°, mit der jeweiligen Längserstreckungsrichtung (12) der jeweils abzweigenden kurzen Quererhebung (6) einschließt.

6. Fahrzeugreifen (1) nach zumindest einem der vorhergehenden Ansprüche, **dadurch gekennzeichnet, dass** die kurzen Quererhebungen (6) zumindest einer Schraffurrippe (5) der Schraffurrippen eine Länge L von 0,2 mm bis 0,5 mm, bevorzugt von 0,25 mm bis 0,40 mm, besonders bevorzugt von 0,25 mm bis 0,32 mm, aufweisen.

7. Fahrzeugreifen (1) nach zumindest einem der vorhergehenden Ansprüche, **dadurch gekennzeichnet, dass** die Abzweigungen (7) zumindest einer Schraffurrippe (5) der Schraffurrippen einen ersten Mittenabstand (22) von 0,2 mm bis 0,4 mm, bevorzugt von 0,25 mm bis 0,30 mm, aufweisen.

8. Fahrzeugreifen (1) nach zumindest einem der vorhergehenden Ansprüche, **dadurch gekennzeichnet, dass** die Schraffurrippen (5) mit einem zweiten Mittenabstand (23) von 0,5 mm bis 0,7 mm, bevorzugt von 0,55 mm bis 0,60 mm, angeordnet sind.

9. Fahrzeugreifen (1) nach zumindest einem der vorhergehenden Ansprüche, **dadurch gekennzeichnet, dass** zumindest eine Schraffurrippe (5) der Schraffurrippen eine Höhe H von 0,1 mm bis 0,8 mm, bevorzugt von 0,2 mm bis 0,5 mm, besonders bevorzugt von 0,25 mm bis 0,35 mm, aufweist.

10. Fahrzeugreifen (1) nach zumindest einem der vorhergehenden Ansprüche, **dadurch gekennzeichnet, dass** zumindest eine Schraffurrippe (5) der Schraffurrippen einander gegenüberliegende Flanken (14) aufweist, die einen Winkel (15') von mindestens 50°, bevorzugt von 55° bis 65°, miteinander einschließen.

11. Fahrzeugreifen (1) nach zumindest einem der vorhergehenden Ansprüche, **dadurch gekennzeichnet, dass** zumindest eine Schraffurrippe (5) der Schraffurrippen und/oder zumindest eine kurze Quererhebung (6) der kurzen Quererhebungen einander gegenüberliegende Flanken (14) aufweist, die einen Winkel (15) von 2° bis 10°, bevorzugt von 6° bis 8°, miteinander einschließen.

12. Fahrzeugreifen (1) nach zumindest einem der vorhergehenden Ansprüche, **dadurch gekennzeichnet, dass** zumindest eine Schraffurrippe (5) der Schraffurrippen und/oder zumindest eine kurze Quererhebung (6) der kurzen Quererhebungen eine Flanke (14) aufweist, die einen konvex gekrümmten und/oder einen linearen und/oder einen konkav gekrümmten und/oder einen gestuften und/oder einen geknickten und/oder einen strukturierten Bereich (16) aufweist.

13. Fahrzeugreifen (1) nach zumindest einem der vorhergehenden Ansprüche, **dadurch gekennzeichnet, dass** der Fahrzeugreifen (1) mehrere Schraffurflächen (4) aufweist, die derart angeordnet sind, dass sie einen maschinenlesbaren Code (41), bevorzugt einen zweidimensionalen Code (41), besonders bevorzugt einen QR-Code (41), darstellen.

14. Vulkanisationsform zur formgebenden Vulkanisation eines Fahrzeugreifens (1) gemäß einem der vorhergehenden Ansprüche, wobei die Vulkanisationsform eine Formfläche aufweist, die eine Negativkontur einer Schraffurfläche (4) aufweist, wobei die Schraffurfläche (4) länglich ausgebildete Schraffurrippen (5) aufweist, die weitgehend parallel zueinander angeordnet sind,
wobei jede Schraffurrippe (5) der Schraffurrippen Abzweigungen (7) aufweist, wobei von jeder Abzweigung (7) jeweils genau eine kurze Quererhebung (6) abzweigt und
wobei die kurzen Quererhebungen (6) alle auf eine gleiche erste Seite (9) der Schraffurrippen abzweigen und in einem freien Ende (8) enden,
**dadurch gekennzeichnet, dass**
die Schraffurrippen (5) mit einem zweiten Mittenabstand (23) von 0,4 mm bis 1,0 mm, bevorzugt von 0,5 mm bis 0,7 mm, besonders bevorzugt von 0,55 mm bis 0,60 mm, angeordnet sind.

15. Verfahren zur Herstellung eines Fahrzeugreifens (1) gemäß einem der Ansprüche 1 bis 12, wobei das Verfahren zumindest die folgenden Schritte umfasst:
a) Gravur einer Negativkontur einer Schraffurfläche (4) in eine Formfläche einer Vulkanisationsform zur formgebenden Vulkanisationsform eines Fahrzeugreifens (1) mittels Lasergravur, wobei die Schraffurfläche (4) länglich ausgebildete Schraffurrippen (5) aufweist, die weitgehend parallel zueinander angeordnet sind, wobei jede Schraffurrippe (5) der Schraffurrippen Abzweigungen (7) aufweist, wobei von jeder Abzweigung (7) jeweils genau eine kurze Quererhebung (6) abzweigt und wobei die kurzen Quererhebungen (6) alle auf eine gleiche erste Seite (9) der Schraffurrippen abzweigen und in einem freien Ende (8) enden,
b) Bereitstellen eines Reifenrohlings und Positionieren des Reifenrohlings in der Vulkanisationsform aufweisend die Formfläche,
c) formgebende Vulkanisation des Reifenrohlings mittels der Vulkanisationsform aufweisend die Formfläche, wodurch die Schraffurfläche (4) in eine Außenfläche des Fahrzeugreifens, insbesondere eine Seitenwand (2) und/oder ein Laufstreifen (3) des Fahrzeugreifens, geprägt wird.

## Claims

1. Vehicle tire (1) with sidewalls (2) and a tread (3) and with at least one hatched area (4) on at least one of the sidewalls (2) and/or the tread (3), wherein the hatched area (4) has elongated hatching ribs (5) which are arranged largely parallel to one another,
wherein each hatching rib (5) of the hatching ribs has branches (7), wherein in each case precisely one short transverse elevation (6) branches off from each branch (7) of the branches, and
wherein the short transverse elevations (6) all branch off on a same first side (9) of the hatching ribs (5) and end in a free end (8),
**characterized in that**
the hatching ribs (5) are arranged with a second center spacing (23) of 0.4 mm to 1.0 mm.

2. Vehicle tire (1) according to Claim 1, **characterized in that** the short transverse elevations (6) of at least one hatching rib (5) of the hatching ribs are arranged largely parallel to one another.

3. Vehicle tire (1) according to at least one of the preceding claims, **characterized in that** the branches (7) of at least one hatching rib (5) of the hatching ribs are arranged equidistantly.

4. Vehicle tire (1) according to at least one of the preceding claims, **characterized in that** the branches (7) of at least one hatching rib (5) of the hatching ribs and the branches (7) of a hatching rib (5) adjacent to the at least one hatching rib (5) are arranged offset to one another.

5. Vehicle tire (1) according to at least one of the preceding claims, **characterized in that** a longitudinal extent direction (10) of at least one hatching rib (5) of the hatching ribs encloses an angle (11) of 45° to 90°, preferably of 60° to 90°, particularly preferably of largely 90°, with the respective longitudinal extent direction (12) of the respective branching-off short transverse elevation (6).

6. Vehicle tire (1) according to at least one of the preceding claims, **characterized in that** the short transverse elevations (6) of at least one hatching rib (5) of the hatching ribs have a length L of 0.2 mm to 0.5 mm, preferably of 0.25 mm to 0.40 mm, particularly preferably of 0.25 mm to 0.32 mm.

7. Vehicle tire (1) according to at least one of the preceding claims, **characterized in that** the branches (7) of at least one hatching rib (5) of the hatching ribs have a first center spacing (22) of 0.2 mm to 0.4 mm, preferably of 0.25 mm to 0.30 mm.

8. Vehicle tire (1) according to at least one of the preceding claims, **characterized in that** the hatching ribs (5) are arranged with a second center spacing (23) of 0.5 mm to 0.7 mm, preferably of 0.55 mm to 0.60 mm.

9. Vehicle tire (1) according to at least one of the preceding claims, **characterized in that** at least one hatching rib (5) of the hatching ribs has a height H of 0.1 mm to 0.8 mm, preferably of 0.2 mm to 0.5 mm, particularly preferably of 0.25 mm to 0.35 mm.

10. Vehicle tire (1) according to at least one of the preceding claims, **characterized in that** at least one hatching rib (5) of the hatching ribs has mutually opposite flanks (14) which enclose an angle (15') of at least 50°, preferably of 55° to 65°, with one another.

11. Vehicle tire (1) according to at least one of the preceding claims, **characterized in that** at least one hatching rib (5) of the hatching ribs and/or at least one short transverse elevation (6) of the short transverse elevations has mutually opposite flanks (14) which enclose an angle (15) of 2° to 10°, preferably of 6° to 8°, with one another.

12. Vehicle tire (1) according to at least one of the preceding claims, **characterized in that** at least one hatching rib (5) of the hatching ribs and/or at least one short transverse elevation (6) of the short transverse elevations has a flank (14) which has a convexly curved and/or a linear and/or a concavely curved and/or a stepped and/or a bent and/or a structured region (16).

13. Vehicle tire (1) according to at least one of the preceding claims, **characterized in that** the vehicle tire (1) has several hatched areas (4) which are arranged in such a way that they represent a machine-readable code (41), preferably a two-dimensional code (41), particularly preferably a QR code (41).

14. Vulcanization mold for the shape-imparting vulcanization of a vehicle tire (1) according to one of the preceding claims, wherein the vulcanization mold has a mold area which has a negative contour of a hatched area (4), wherein the hatched area (4) has elongated hatching ribs (5) which are arranged largely parallel to one another,
wherein each hatching rib (5) of the hatching ribs has branches (7), wherein in each case precisely one short transverse elevation (6) branches off from each branch (7), and
wherein the short transverse elevations (6) all branch off on a same first side (9) of the hatching ribs and end in a free end (8),
**characterized in that**
the hatching ribs (5) are arranged with a second center spacing (23) of 0.4 mm to 1.0 mm, preferably of 0.5 mm to 0.7 mm, particularly preferably of 0.55 mm to 0.60 mm.

15. Method for producing a vehicle tire (1) according to one of Claims 1 to 12, wherein the method comprises at least the following steps:
a) engraving a negative contour of a hatched area (4) into a mold area of a vulcanization mold for the shape-imparting vulcanization mold of a vehicle tire (1) by means of laser engraving, wherein the hatched area (4) has elongated hatching ribs (5) which are arranged largely parallel to one another, wherein each hatching rib (5) of the hatching ribs has branches (7), wherein in each case precisely one short transverse elevation (6) branches off from each branch (7), and
wherein the short transverse elevations (6) all branch off on a same first side (9) of the hatching ribs and end in a free end (8),
b) providing a tire blank and positioning the tire blank in the vulcanization mold having the mold area,
c) shape-imparting vulcanization of the tire blank by means of the vulcanization mold having the mold area, as a result of which the hatched area (4) is imprinted into an outer area of the vehicle tire, in particular a sidewall (2) and/or a tread (3) of the vehicle tire.

## Revendications

1. Pneu de véhicule (1) avec des parois latérales (2) et une bande de roulement (3) et avec au moins une surface hachurée (4) sur au moins l'une des parois latérales (2) et/ou la bande de roulement (3), la surface hachurée (4) présentant des nervures de hachures (5) réalisées sous forme allongée, qui sont agencées de manière largement parallèle les unes aux autres,
chaque nervure de hachure (5) des nervures de hachures présentant des bifurcations (7), exactement une courte élévation transversale (6) bifurquant de chaque bifurcation (7) des bifurcations et
les courtes élévations transversales (6) bifurquant toutes vers un même premier côté (9) des nervures de hachures (5) et se terminant par une extrémité libre (8), **caractérisé en ce que**
les nervures de hachures (5) sont agencées avec un deuxième espacement des centres (23) de 0,4 mm à 1,0 mm.

2. Pneu de véhicule (1) selon la revendication 1, **caractérisé en ce que** les courtes élévations transversales (6) d'au moins une nervure de hachure (5) des nervures de hachures sont agencées de manière largement parallèle les unes aux autres.

3. Pneu de véhicule (1) selon au moins l'une quelconque des revendications précédentes, **caractérisé en ce que** les bifurcations (7) d'au moins une nervure de hachure (5) des nervures de hachures sont agencées de manière équidistante.

4. Pneu de véhicule (1) selon au moins l'une quelconque des revendications précédentes, **caractérisé en ce que** les bifurcations (7) d'au moins une nervure de hachure (5) des nervures de hachures et les bifurcations (7) d'une nervure de hachure (5) voisine de l'au moins une nervure de hachure (5) sont agencées en décalage les unes par rapport aux autres.

5. Pneu de véhicule (1) selon au moins l'une quelconque des revendications précédentes, **caractérisé en ce qu'**une direction d'extension longitudinale (10) d'au moins une nervure de hachure (5) des nervures de hachures forme un angle (11) de 45° à 90°, de préférence de 60° à 90°, de manière particulièrement préférée largement de 90°, avec la direction d'extension longitudinale respective (12) de la courte élévation transversale (6) qui bifurque respectivement.

6. Pneu de véhicule (1) selon au moins l'une quelconque des revendications précédentes, **caractérisé en ce que** les courtes élévations transversales (6) d'au moins une nervure de hachure (5) des nervures de hachures présentent une longueur L de 0,2 mm à 0,5 mm, de préférence de 0,25 mm à 0,40 mm, de manière particulièrement préférée de 0,25 mm à 0,32 mm.

7. Pneu de véhicule (1) selon au moins l'une quelconque des revendications précédentes, **caractérisé en ce que** les bifurcations (7) d'au moins une nervure de hachure (5) des nervures de hachures présentent un premier espacement des centres (22) de 0,2 mm à 0,4 mm, de préférence de 0,25 mm à 0,30 mm.

8. Pneu de véhicule (1) selon au moins l'une quelconque des revendications précédentes, **caractérisé en ce que** les nervures de hachures (5) sont agencées avec un deuxième espacement des centres (23) de 0,5 mm à 0,7 mm, de préférence de 0,55 mm à 0,60 mm.

9. Pneu de véhicule (1) selon au moins l'une quelconque des revendications précédentes, **caractérisé en ce qu'**au moins une nervure de hachure (5) des nervures de hachures présente une hauteur H de 0,1 mm à 0,8 mm, de préférence de 0,2 mm à 0,5 mm, de manière particulièrement préférée de 0,25 mm à 0,35 mm.

10. Pneu de véhicule (1) selon au moins l'une quelconque des revendications précédentes, **caractérisé en ce qu'**au moins une nervure de hachure (5) des nervures de hachures présente des flancs (14) opposés les uns aux autres, qui forment entre eux un angle (15') d'au moins 50°, de préférence de 55° à 65°.

11. Pneu de véhicule (1) selon au moins l'une quelconque des revendications précédentes, **caractérisé en ce qu'**au moins une nervure de hachure (5) des nervures de hachures et/ou au moins une courte élévation transversale (6) des courtes élévations transversales présente des flancs (14) opposés les uns aux autres, qui forment entre eux un angle (15) de 2° à 10°, de préférence de 6° à 8°.

12. Pneu de véhicule (1) selon au moins l'une quelconque des revendications précédentes, **caractérisé en ce qu'**au moins une nervure de hachure (5) des nervures de hachures et/ou au moins une courte élévation transversale (6) des courtes élévations transversales présente un flanc (14) présentant une zone (16) à courbure convexe et/ou linéaire et/ou à courbure concave et/ou étagée et/ou pliée et/ou structurée.

13. Pneu de véhicule (1) selon au moins l'une quelconque des revendications précédentes, **caractérisé en ce que** le pneu de véhicule (1) présente plusieurs surfaces hachurées (4) qui sont agencées de manière à représenter un code (41) lisible par une machine, de préférence un code bidimensionnel (41), de manière particulièrement préférée un code QR (41).

14. Moule de vulcanisation pour la vulcanisation de mise en forme d'un pneu de véhicule (1) selon l'une quelconque des revendications précédentes, dans lequel le moule de vulcanisation présente une surface de moulage qui présente un contour négatif d'une surface hachurée (4), la surface hachurée (4) présentant des nervures de hachures (5) réalisées sous forme allongée qui sont agencées de manière largement parallèle les unes aux autres,
chaque nervure de hachure (5) des nervures de hachures présentant des bifurcations (7), exactement une courte élévation transversale (6) bifurquant de chaque bifurcation (7) et
les courtes élévations transversales (6) bifurquant toutes vers un même premier côté (9) des nervures de hachures et se terminant par une extrémité libre (8), **caractérisé en ce que**
les nervures de hachure (5) sont agencées avec un deuxième espacement des centres (23) de 0,4 mm à 1,0 mm, de préférence de 0,5 mm à 0,7 mm, de manière particulièrement préférée de 0,55 mm à 0,60 mm.

15. Procédé de fabrication d'un pneu de véhicule (1) selon l'une quelconque des revendications 1 à 12, le procédé comprenant au moins les étapes suivantes :
a) la gravure d'un contour négatif d'une surface hachurée (4) dans une surface de moulage d'un moule de vulcanisation pour le moule de vulcanisation de mise en forme d'un pneu de véhicule (1) au moyen d'une gravure au laser, la surface hachurée (4) présentant des nervures de hachures (5) réalisées sous forme allongée qui sont agencées de manière largement parallèle les unes aux autres, chaque nervure de hachure (5) des nervures de hachures présentant des bifurcations (7), exactement une courte élévation transversale (6) bifurquant de chaque bifurcation (7) et
les courtes élévations transversales (6) bifurquant toutes vers un même premier côté (9) des nervures de hachures et se terminant par une extrémité libre (8),
b) la fourniture d'une ébauche de pneu et le positionnement de l'ébauche de pneu dans le moule de vulcanisation présentant la surface de moulage,
c) la vulcanisation de mise en forme de l'ébauche de pneu au moyen du moule de vulcanisation présentant la surface de moulage, moyennant quoi la surface hachurée (4) est estampée dans une surface extérieure du pneu de véhicule, notamment une surface latérale (2) et/ou une bande de roulement (3) du pneu de véhicule.
